# EUROPEAN PATENT SPECIFICATION

(11) **EP 1 690 755 B1**
(45) Date of publication and mention of the grant of the patent: **30.09.2009**
(21) Application number: 06003013.7
(22) Date of filing: 15.02.2006
(51) Int. Cl.: B60R 22/36

(54) **Rotating member chatter preventing structure in a webbing take-up device**
Aufbau zum verhindern von Klappergeräuschen in einem Drehteil in einem Sicherheitsgurtaufroller
Structure anti-bruit pour membre rotatif dans en enrouleur de ceinture de sécurité

(30) Priority: 15.02.2005 JP 2005037734
(43) Date of publication of application: 16.08.2006
(73) Proprietor: KABUSHIKI KAISHA TOKAI RIKA DENKI SEISAKUSHO, Niwa-gun, Aichi-ken (JP)
(72) Inventor: Kitazawa, Yasuho K.K. Tokai-Rika-Denki-Seisakusho, Niwa-gun Aichi-ken (JP); Takamatsu, Hitoshi K.K.Tokai-Rika-Denki-Seisakusho, Niwa-gun Aichi-ken (JP); Yasuda, Masaki K.K. Tokai-Rika-Denki-Seisakusho, Niwa-gun Aichi-ken (JP); Aihara, Kazuhiko K.K. Tokai-Rika-Denki-Seisakusho, Niwa-gun Aichi-ken (JP); Nakashima, Toshio K.K. Tokai-Rika-Denki-Seisakusho, Niwa-gun Aichi-ken (JP); Nagata, Tomonori K.K. Tokai-Rika-Denki-Seisakusho, Niwa-gun Aichi-ken (JP)
(74) Representative: Goddar, Heinz J.

(56) References cited:
- EP-A- 0 669 233
- EP-A- 0 700 812
- WO-A-96/19365

## Description

### BACKGROUND OF THE INVENTION

### Field of the Invention

The present invention relates to a structure that prevents the chatter of a rotating member rotatably supported by a rotating shaft of a support member and to a webbing take-up device including a lock mechanism that deters the rotation, in a webbing belt pullout direction, of a take-up shaft that takes up in layers a passenger-restraining webbing belt when a predetermined condition, such as the sudden deceleration of a vehicle disposed with the webbing take-up device, is fulfilled.

### Description of the Related Art

The document EP 0700812A discloses a lock plate chatter preventing structure which, under a predetermined condition, directly or indirectly engages with a take-up shaft that takes up a passenger-restraining webbing belt to deter the rotation of the take-up shaft in a webbing belt pullout direction, the lock plate chatter preventing structure including:
a support member that rotatably supports the lock plate.

The document EP 0700812 further discloses a webbing take-up device comprising:
a take-up shaft that takes up a webbing belt for restraining a passenger;
lock means configured to include a lock plate that includes one axial-direction end portion rotatably supported by a support member the lock plate rotating under a predetermined condition and directly or indirectly engaging with the take-up shaft to deter the rotation of the take-up shaft in a webbing belt pullout direction.

Among webbing take-up devices attached to vehicles, there is a webbing take-up device including a lock mechanism that deters the rotation, in a webbing belt pullout direction, of a take-up shaft that takes up in layers a webbing belt when the vehicle disposed with the webbing take-up device experiences an emergency situation. An example thereof is disclosed in Japanese Patent Application Publication (JP-A) No. 10-500648.

The lock mechanism includes a lock gear that rotates coaxially with the take-up shaft, for example, and ratchet teeth are formed on the outer peripheral surface of the lock gear. The lock mechanism also includes a lock plate corresponding to the lock gear. The lock plate is pivotably supported by a rotating shaft of a support member attached to a frame for supporting the take-up shaft. The lock plate is configured to be engageable with the ratchet teeth of the lock gear when the lock plate pivots around its axis. There is also a lock mechanism that does not include a lock gear but whose lock plate is directly engageable with the take-up shaft.

Webbing take-up devices including such a lock mechanism include an acceleration sensor that detects when the vehicle suddenly decelerates. When the acceleration sensor detects the acceleration (deceleration) of the vehicle and the acceleration (deceleration) of the vehicle is equal to or greater than a certain level, the acceleration sensor activates the lock mechanism. When it is detected by the acceleration sensor that the acceleration (deceleration) of the vehicle is equal to or greater than the certain level, the lock mechanism is activated, and the lock plate directly or indirectly (via the lock gear) engages with the take-up shaft, receives the rotational force (load) of the take-up shaft in the webbing belt pullout direction, and deters the rotation of the take-up shaft in the webbing belt pullout direction.

Incidentally, because the lock plate is simply rotatably supported by the support member, the lock plate chatters in its own axial direction. For this reason, it is conceivable to prevent the lock plate from chattering by disposing an urging member such as a spring washer between the lock plate and the support member.

However, when an urging member such as a spring washer is disposed between the lock plate and the support member, there is the problem that the number of parts in the device and the number of man-hours required for assembly end up increasing. For this reason, there has been desired a measure for suppressing the chatter of the lock plate without disposing an urging member such as a spring washer between the lock plate and the support member.

### SUMMARY OF THE INVENTION

In view of this problem, it is an object of the present invention to obtain a rotating member chatter preventing structure that can suppress the chatter of a rotating member in the axial direction without increasing the number of parts and a webbing take-up device including the chatter preventing structure.

A first aspect of the invention provides a rotating member chatter preventing structure that regulates the displacement, in an axial direction, of a rotating member including one axial-direction end portion that is rotatably supported by a support member, the rotating member chatter preventing structure including an urging portion formed continuously from the support member, wherein the urging portion includes a leading end that pressingly contacts the one axial-direction end portion of the rotating member and urges the rotating member toward the other axial-direction end.

According to the rotating member chatter preventing structure pertaining to this aspect, the one axial-direction end portion of the rotating member is rotatably supported by the support member.

The urging portion is formed continuously from the support member and pressingly contacts the one axial-direction end portion of the rotating member. For this reason, the rotating member is urged toward the other axial-direction end. Thus, the rotating member is held against a frame or plate that supports the other axial-direction end portion of the rotating member, whereby the chattering of the rotating member in its axial direction is suppressed.

Consequently, the rotating member chatter preventing structure based on this aspect can suppress the chattering of the rotating member in its axial direction without the need to dispose an urging member such as a spring washer between the rotating member and the support member.

Also, the number of parts in the device and the number of man-hours required for assembly can be reduced because it is not necessary to dispose an urging member such as a spring washer between the rotating member and the support member.

In a second aspect of the invention, the leading end of the urging portion is positioned in the vicinity of the axial position of the rotating member.

According to the rotating member chatter preventing structure based on this aspect, the leading end of the urging portion is positioned in the vicinity of the axial position of the rotating member. Thus, the rotating member is always pressingly contacted by the urging portion regardless of whether or not the rotating member itself has rotated (regardless of the rotational amount of the rotating member when the rotating member has rotated). For this reason, the rotating member is always urged toward the other axial-direction end. Thus, the rotating member is always held against a frame or plate that supports the other axial-direction end portion of the rotating member. Consequently, the rotating member chatter preventing structure of this aspect can effectively absorb the chattering of the rotating member in its axial direction.

A third aspect of the invention provides a webbing take-up device comprising: a take-up shaft that takes up a webbing belt for restraining a passenger; lock means configured to include a lock plate that includes one axial-direction end portion rotatably supported by a support member with the lock plate rotating under a predetermined condition and directly or indirectly engaging with the take-up shaft to deter the rotation of the take-up shaft in a webbing belt pullout direction; and an urging portion that is formed continuously from the support member and includes a leading end that pressingly contacts the one axial-direction end portion of the lock plate and urges the lock plate toward the other axial-direction end.

In the webbing take-up device based on this aspect, when the passenger places the webbing belt around his/her body, the webbing belt is pulled out from the take-up shaft and placed around the body of the passenger. Thus, the body of the passenger is restrained.

Also, in the webbing take-up device, the one axial-direction end portion of the lock plate of the lock means is rotatably supported by the support member, and when a predetermined condition is fulfilled (e.g., when the vehicle suddenly decelerates), the lock plate rotates and directly or indirectly engages with the take-up shaft. Thus, because the rotation of the take-up shaft in the webbing belt pullout direction is deterred, the webbing belt is not pulled out from the take-up shaft and the body of the passenger can be restrained by the webbing belt even under the predetermined condition.

Incidentally, in the webbing take-up device, the urging portion is formed continuously from the support member and includes a leading end that pressingly contacts the one axial-direction end portion of the lock plate. For this reason, the lock plate is urged toward the other axial-direction end, and the chattering of the lock plate as the rotating member in its axial direction is suppressed because the lock plate is held against a frame or plate that supports the other axial-direction end portion of the lock plate.

Consequently, the webbing take-up device based on this aspect can suppress the chattering of the lock plate in its axial direction without the need to dispose an urging member such as a spring washer between the lock plate and the support member.

Also, the number of parts in the device and the number of man-hours required for assembly can be reduced because it is not necessary to dispose an urging member such as a spring washer between the rotating member and the support member.

In a fourth aspect of the invention, the leading end of the urging portion is positioned in the vicinity of the axial position of the lock plate.

According to the webbing take-up device based on this aspect, the leading end of the urging portion is positioned in the vicinity of the axial position of the lock plate. Thus, the lock plate is always pressingly contacted by the urging portion regardless of whether or not the lock plate itself has rotated (regardless of the rotational amount of the lock plate when the lock plate has rotated). For this reason, the lock plate is always urged toward the other axial-direction end. Thus, the lock plate is always held against a frame or plate that supports the other axial-direction end portion of the lock plate.

Consequently, the webbing take-up device of this aspect can effectively absorb the chattering of the lock member in its axial direction.

As described above, the rotating member chatter preventing structure and the webbing take-up device including the chatter preventing structure pertaining to the present invention have the excellent effect that they can suppress the chatter of a rotating member (a lock plate in a webbing take-up device) without increasing the number of parts.

### BRIEF DESCRIPTION OF THE DRAWINGS

FIG 1 is an exploded perspective view showing the vicinity of a portion where a lock plate and a support member are coupled together in a webbing take-up device pertaining to an embodiment of the invention;
FIG. 2 is an exploded perspective view, seen from one side and diagonally above, showing the webbing take-up device pertaining to the embodiment of the invention; and
FIG. 3 is a cross-sectional view corresponding to FIG. 1 showing the vicinity of the portion where the lock plate and the support member are coupled together.

### DETAILED DESCRIPTION OF THE INVENTION

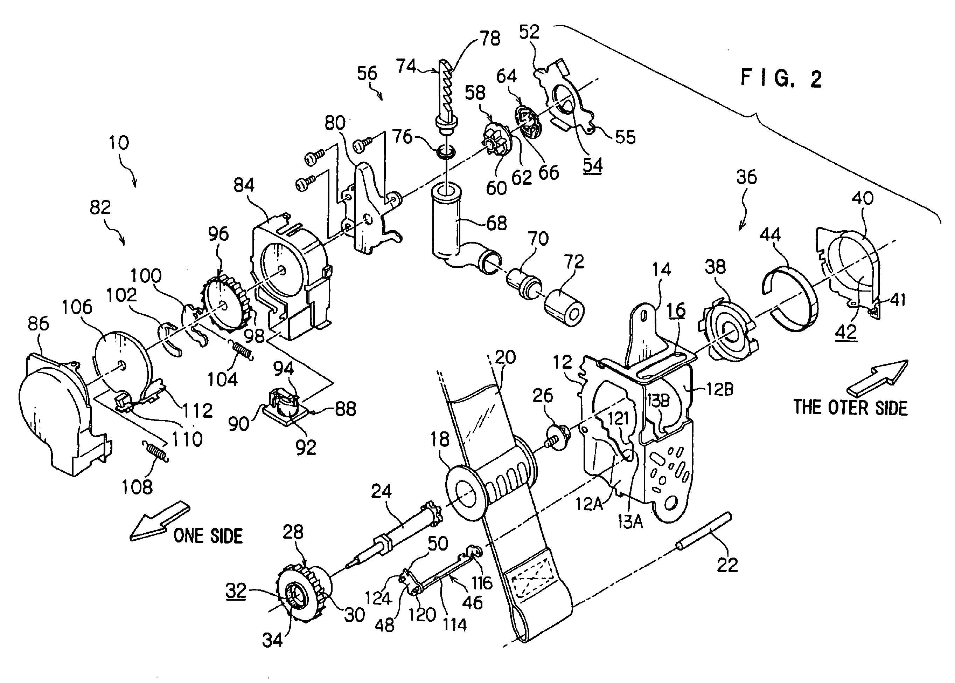

FIG. 2 is an exploded perspective view, seen from one side and diagonally above, showing the relevant portions of a webbing take-up device 10 pertaining to an embodiment of the invention.

The webbing take-up device 10 includes a frame 12 that is made of metal and is substantially U-shaped when seen from above. The frame 12 is fixed to the inside of a cabin in a vehicle. A cutout 13A for rotatably disposing therein a lock portion 48 of a later-described lock plate 46 is formed in one side wall 12A of the frame 12. A cutout 13B for rotatably disposing therein a shaft receiving portion 116 of the later-described lock plate 46 is formed in another side wall 12B of the frame 12.

A coupler piece 14 is disposed on the frame 12 such that the coupler piece 14 spans the distance between the upper end of the one side wall 12A and the upper end of the other side wall 12B of the frame 12. The coupler piece 14 is fixed to the inside of the cabin and includes an insertion hole 16.

A spool 18 serving as a take-up shaft is rotatably supported between the one side wall 12A and the other side wall 12B of the frame 12. A long band-like webbing belt 20 for restraining a passenger is wound onto the spool 18. A circular column-like shaft 22 disposed on the base end of the webbing belt 20 is attached to the spool 18, and the vicinity of the base end of the webbing belt 20 is passed through the spool 18, whereby the webbing belt 20 is attached to the spool 20.

The vicinity of the portion of the webbing belt 20 wound onto the spool 18 is inserted through the insertion hole 16, and the webbing belt 20 is placed around the body of a passenger in the vehicle. The webbing belt 20 is taken up as a result of the spool being rotated in a take-up direction, and is pulled out as a result of the spool 18 being rotated in a pullout direction (webbing belt pullout direction).

A torsion shaft 24 that configures lock means is disposed in the center axial portion of the spool 18. The torsion shaft 24 is configured to be twistingly deformable as a result of a twist load equal to or greater than a predetermined twist load being imparted thereto. The other end of the torsion shaft 24 is attached to the other end of the spool 18, such that the torsion shaft 24 rotates integrally with the spool 18. A screw member 26 is screwed into the other end of the torsion shaft 24.

A lock gear 28 that configures the lock means together with the torsion shaft 24 is disposed on the one side of the spool 18. The lock gear 28 is attached to the vicinity of the one end of the torsion shaft 24. The lock gear 28 rotates integrally with the torsion shaft 24 and the spool 18 at times other than when the torsion shaft 24 is twistingly deformed. Ratchet teeth 30 are formed on the outer periphery of the lock gear 28. A substantially circular column-like knurl hole 32 is formed in the center of the lock gear 28. The knurl hole 32 opens to the one side, and a knurled surface 34 is formed as a result of the entire outer periphery of the knurl hole 32 being knurled.

An urging mechanism 36 is disposed on the other side of the frame 12. The urging mechanism 36 includes a spring sheet 38 that is attached to the outer side of the other side wall 12B of the frame 12. The spring sheet 38 covers the other side surface of the spool 18 in a state where the screw member 26 has been caused to protrude toward the other side. The other side of the spring sheet 38 is covered by a spring cover 40 serving as a support member. The spring cover 40 is attached to the outer side of the other side wall 12B of the frame 12. The spring cover 40 comprises a resin material, for example. A substantially circular column-like concave portion 42 that opens toward the one side is formed in the spring cover 40.

A coil spring 44 is disposed inside the concave portion 42 of the spring cover 40. The outer end of the coil spring 44 is fixed to the inner peripheral surface of the concave portion 42. The inner end of the coil spring 44 is fixed to the screw member 26. The coil spring 44 urges the torsion shaft 24, the spool 18 and the lock gear 28 in the take-up direction via the screw member 26.

The spring cover 40 includes, on its lower portion, a circular column-like rotating shaft 41 that protrudes toward the one side. The rotating shaft 41 is formed continuously with the lower portion of the spring cover 40 and corresponds to the later-described lock plate 46.

The portion of the spring cover 40 below the rotating shaft 41 is formed in a plate-like shape whose plate thickness direction is in the axial direction of the rotating shaft 41. An inverted U-shaped cutout 126 is formed in this plate-like portion, whereby a plate spring 128 serving as an urging portion is formed.

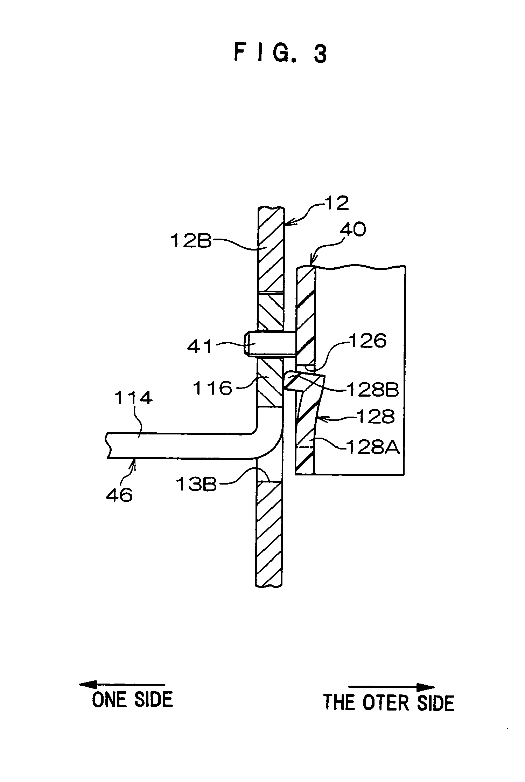

The plate spring 128 includes a base end portion 128A that is formed continuously with the spring cover 40 at the lower end position of the cutout 126 (the lower end position in the vertical direction of FIG. 2). The plate spring 128 also includes a leading end portion 128B that is formed such that the leading end portion 128B protrudes toward the later-described lock plate 46 (toward the one side) in the vicinity of the rotating shaft 41 (i.e., the leading end portion 128B is positioned in the vicinity of the axial position of the later-described lock plate 46). The plate spring 128 is configured to be elastically deformable in the axial direction of the lock plate 46 (the axial direction of the rotating shaft 41). As shown in FIG. 3, the plate spring 128 always pressingly contacts the lock plate 46 (or more specifically, the other side wall of the shaft receiving portion 116 of the later-described lock plate 46). Thus, the plate spring 128 urges, with its own elastic force, the lock plate 46 toward the one side in the axial direction of the lock plate 46 (toward the one side in the axial direction of the rotating shaft 41).

The lock plate 46 configures the lock means together with the torsion shaft 24 and the lock gear 28. The lock plate 46 is disposed such that it spans the distance between the one side wall 12A and the other side wall 12B of the frame 12.

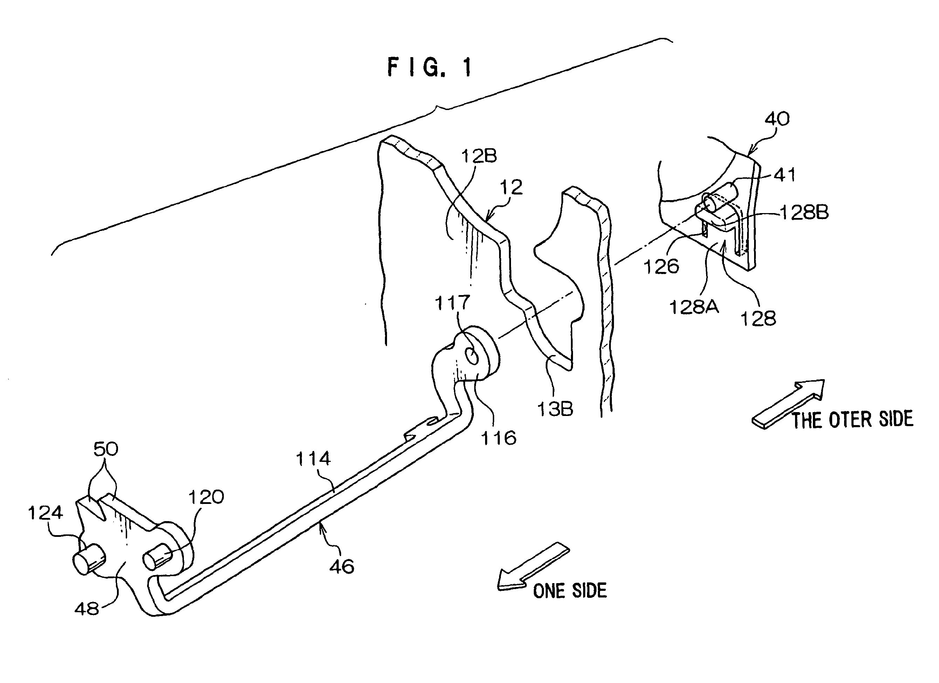

As shown in FIG. 1, the lock plate 46 includes the shaft receiving portion 116, which corresponds to the cutout 13B of the frame 12. The shaft receiving portion 116 is a plate-like body formed in a general L shape. A shaft receiving hole 117 is formed along the plate thickness direction in one end portion of the shaft receiving portion 116. The rotating shaft 41 of the spring cover 40 is inserted through the shaft receiving hole 117 of the shaft receiving portion 116. The lock plate 46 is rotatably supported by the rotating shaft 41, and the shaft receiving portion 116 is configured to be pivotable inside the cutout 13B.

A connector portion 114 is formed continuously with the other end (opposite from the shaft receiving hole 117) of the shaft receiving portion 116. The connector portion 114 is a plate-like body that is long in the spanning direction of the lock plate 46. The shaft receiving portion 116 is vertically disposed at the other end portion of the connector portion 114 such that the plate thickness direction of the shaft receiving portion 116 is at a right angle with respect to the plate thickness direction of the connector portion 114.

The lock portion 48 is formed continuously with the end portion of the connector portion 114 opposite from the shaft receiving portion 116 (i.e., the end portion of the connector portion 114 near the one side wall 12A). The lock portion 48 is a generally T-shaped plate-like body that extends from the end portion at the one side of the connector portion 114 toward one side in the plate thickness direction of the connector portion 114 (the side in the plate thickness direction of the connector portion 114 where the shaft receiving portion 116 is vertically disposed).

A shaft portion 124 that protrudes toward the one side is integrally disposed on the lock portion 48. The shaft portion 124 is formed in a circular column-like shape and is disposed on one end side of the lock portion 48 with its axial direction being shifted from the axial position of a support shaft 120 parallel to the other end side in the width direction.

The support shaft 120 is integrally disposed on the lock portion 48 and protrudes from the lock portion 48 toward the one side. The support shaft 120 is formed in a circular column-like shape and is disposed on one end side of the lock portion 48 with its axial position being identical with the axial position of the shaft receiving hole 117 of the shaft receiving portion 116.

The support shaft 120 of the lock portion 48 is inserted through a support hole 55 formed in the lower portion of a gear case 52 serving as a plate. The lock portion 48 is rotatably supported by the gear case 52 such that the lock portion 48 is rotatable inside the cutout 13A. In this state, the lock portion 48 is disposed diagonally below the lock gear 28, as shown in FIG. 2. Lock teeth 50 (see FIG. 1) are formed on the other end of the lock portion 48. The lock portion 48 is disposed on the opposite side of the lock gear 28 and placed in a state where the lock teeth 50 cannot mesh with the ratchet teeth 30 of the lock gear 28.

As shown in FIG. 2, the gear case 52 is attached to the outer side of the one side wall 12A of the frame 12 and covers the one side of the lock gear 28. A circular through hole 54 is formed in the center of the gear case 52. The knurl hole 32 of the lock gear 28 is exposed through the through hole 54, and the torsion shaft 24 is passed through the through hole 54.

The circular support hole 55, whose diameter is smaller than that of the through hole 54, is formed diagonally below the through hole 54. The support hole 55 corresponds to the support shaft 120 of the lock plate 46. The support shaft 120 of the lock plate 46 is inserted through the support hole 55, and the gear case 52 rotatably supports the lock portion 48 of the lock plate 46 as described above to allow the lock portion 48 to rotate inside the cutout 13A of the frame 12. In this manner, the gear case 52 rotatably supports the lock plate 46 in cooperation with the spring cover 40, and the connector portion 14 of the lock plate 46 spans the distance between the one side wall 12A and the other side wall 12B of the frame 12.

A pretensioner mechanism 56 is disposed on the outer side of the one side wall 12A of the frame 12. The pretensioner mechanism 56 includes a pinion 58. The pinion 58 is disposed on the one side of the gear case 52 and is rotatably supported on the torsion shaft 24. Pinion teeth 60 are formed on the one side portion of the pinion 58.

A cam 62 is formed on the other side portion of the pinion 58. Concavo-convexities are alternately formed on the outer periphery of the cam 62. The cam 62 is inserted into the knurl hole 32 via the through hole 54 of the gear case 52 and does not contact the knurled surface 34, so that the lock gear 28 is rotatable independent of the pinion 58.

The pretensioner mechanism 56 also includes a clutch plate 64 that is disposed between the gear case 52 and the pinion 58. Plural mesh pawls 66 are formed in the center of the clutch plate 64, and each of the mesh pawls 66 protrudes from the clutch plate 64 toward the other side. The mesh pawls 66 fit together with the concave portions of the cam 62. Thus, the clutch plate 64 is attached to the pinion 58. The mesh pawls 66 are inserted into the knurl hole 32 via the through hole 54 of the gear case 52 together with the cam 62 and do not contact the knurled surface 34, so that the lock gear 28 is rotatable independent of the clutch plate 64.

The pretensioner mechanism 56 also includes a cylinder 68 that is circular and substantially L-shaped. The cylinder 68 is fixed to the outer side of the one side wall 12A of the frame 12 below the pinion 58. A gas generator 70 is disposed on, and a generator cap 72 that has a bottomed circular column-like shape is fixed to, the lower end of the cylinder 68. The gas generator 70 closes off the lower end of the cylinder 68 in a state where it is covered with the generator cap 72.

The pretensioner mechanism 76 also includes a piston 74 that is inserted into the cylinder 68 from the upper end of the cylinder 68. An 0-ring 76 that seals the space between the lower end of the piston 74 and the cylinder 68 is disposed on the lower end of the piston 74. A rack 78 is formed on the portion of the piston 74 other than the lower end of the piston 74.

The pretensioner mechanism 76 also includes a cover plate 80 that is shaped like a substantially triangular columnar vessel. The cover plate 80 is fixed to the outer side of the one side wall 12A of the frame 12. The torsion shaft 24 is inserted through the lower portion of the cover plate 80 such that the cover plate 80 rotatably supports the torsion shaft 24. The other side surface and the lower surface of the cover plate 80 are open. The cover plate 80 houses therein the pinion 58, the clutch plate 64 and the upper portion of the piston 74, and nips the gear case 52 between itself and the one side wall 12A of the frame 12.

A sensor mechanism 82 that configures the lock means together with the torsion shaft 24, the lock gear 28 and the lock plate 46 is disposed on the one side of the pretensioner mechanism 56. The sensor mechanism 82 includes a box-like sensor holder 84 whose other side is open. The sensor holder 84 is fixed to the one side wall 12A of the frame 12 in a state where the torsion shaft 24 has been passed through the upper portion of the sensor holder 84. The one side of the sensor holder 84 is covered by a box-like sensor cover 86 whose other side is open. The sensor cover 86 is fixed to the sensor holder 84 and the one side wall 12A of the frame 12.

An acceleration sensor 88 is retained in the lower portion of the sensor holder 84 and is disposed in the space between the sensor holder 84 and the sensor cover 86. The acceleration sensor 88 includes a mount 90. A substantially inverted cone-shaped concave portion is formed in the upper surface of the mount 90, and a sphere 92 is mounted in the concave portion of the mount 90. A movable pawl 94 is pivotably supported above the sphere 92, and the movable pawl 94 is placed on top of the sphere 92.

A V gear 96 is disposed in the space between the sensor holder 84 and the sensor cover 86. The one side end of the torsion shaft 24 is attached to the V gear 96, such that the V gear 96 rotates integrally with the torsion shaft 24. Ratchet teeth 98 are formed on the outer periphery of the V gear 96.

A W pawl 100 is pivotably supported on the V gear 96. A W mass 102 is fixed to the W pawl 100. A sensor spring 104 is disposed such that it spans the distance between the V gear 96 and the W pawl 100. The sensor spring 104 urges the V gear 96 in the take-up direction with respect to the W pawl 100.

A substantially discoid gear sensor 106 is disposed in the space between the sensor holder 84 and the sensor cover 86 at the one side of the V gear 96. The gear sensor 106 is rotatably supported on the one side end edge of the torsion shaft 24. A coil spring 108 is disposed such that it spans the distance between the gear sensor 106 and the inner surface of the sensor cover 86. The coil spring 108 urges the gear sensor 106 in the take-up direction.

An engagement pawl 110 is rotatably supported at the one side on the lower portion of the gear sensor 106. The axis of the center of rotation of the engagement pawl 110 is parallel to the axial direction of the torsion shaft 24, and the engagement pawl 110 is configured to be meshable with the ratchet teeth 98 of the V gear 96. A push piece 112 is formed at the other side on the lower portion of the gear sensor 106.

Next, the action of the present embodiment will be described.

In the webbing take-up device 10 having the above-described configuration, the coil spring 44 of the urging mechanism 36 urges the torsion shaft 24, the spool 18 and the lock gear 28 in the take-up direction via the screw member 26, whereby the webbing belt 20 is urged in the direction in which it is taken up onto the spool 18.

In the webbing take-up device 10, when the passenger is to place the webbing belt 20 around his/her body, the webbing belt 20 is pulled out from the spool 18 and placed around the body of the passenger. Thus, the body of the passenger is restrained.

Also, in the webbing take-up device 10, the acceleration sensor 88 of the sensor mechanism 82 detects the fact that the acceleration of the vehicle (the moving acceleration of the spool 18) is equal to or greater than a predetermined acceleration. That is, when the acceleration of the vehicle is equal to or greater than a predetermined acceleration (e.g., when the vehicle suddenly decelerates), the sphere 92 of the acceleration sensor 88 moves and rises in the concave portion of the mount 90 in the direction opposite to the acceleration direction and pushes up the movable pawl 94. Thus, the movable pawl 94 causes the engagement pawl 110 of the gear sensor 106 to rotate and engage with the ratchet teeth 98 of the V gear 96, whereby the gear sensor 106 becomes coupled to the V gear 96.

The W pawl 100, the W mass 102 and the sensor spring 104 of the sensor mechanism 82 detect the fact that the pullout acceleration of the webbing belt 20 (the rotational acceleration of the webbing belt 20 in the pullout direction) is equal to or greater than a specific acceleration. That is, when the pullout acceleration of the webbing belt 20 is equal to or greater than a specific acceleration, the rotation of the W pawl 100 and the W mass 102 in the pullout direction is suppressed by inertia with respect to the V gear 96 that is rotated in the pullout direction via the spool 18 and the torsion shaft 24, whereby the W pawl 100 and the W mass 102 are pivoted with respect to the V gear 96.

Thus, the W pawl 100 causes the engagement pawl 110 of the gear sensor 106 to rotate and engage with the ratchet teeth 98 of the V gear 96, whereby the gear sensor 106 becomes coupled to the V gear 96.

When the gear sensor 106 becomes coupled to the V gear 96 as described above, the V gear 96 and the gear sensor 106 are rotated somewhat in the pullout direction via the spool 18 and the torsion shaft 24 due to the pullout load on the webbing belt 20 from the passenger. In this case, the rotational force of the V gear 96 and the gear sensor 106 is reduced by the urging force of the sensor spring 104 that has increased due to the inertia of the W pawl 100 and the W mass 102.

The shaft receiving portion 116 of the lock plate 46 is rotatably supported by the rotating shaft 41 of the spring cover 40. Additionally, the lock portion 48 of the lock plate 46 is rotatably supported by the gear case 52 as a result of the support shaft 120 integrated with the lock portion 48 being inserted through the shaft receiving hole 55 of the gear case 52. That is, the lock plate 46 spans the distance between the one side wall 12A and the other side wall 12B of the frame 12 and is rotatably supported by the spring cover 40 and the gear case 52.

The lock plate 46 is rotated toward the spool 18 by the push piece 112 of the gear sensor 106 as a result of the gear sensor 106 being rotated somewhat in the pullout direction. as previously mentioned. That is, the lock portion 48 rotates toward the lock gear 28. Thus, a pullout load is imparted to the webbing belt 20 from the passenger, and a rotational force is imparted in the pullout direction to the spool 18, the torsion shaft 24 and the lock gear 28, whereby the lock teeth 50 of the lock portion 48 mesh with the ratchet teeth 30 of the lock gear 28, the rotation of the lock gear 28 in the pullout direction is deterred, and the pullout of the webbing belt 20 is deterred.

For this reason, even when the acceleration of the vehicle is equal to or greater than the predetermined acceleration (e.g., when the vehicle suddenly decelerates), the body of the passenger can be restrained by the webbing belt 20 without the webbing belt 20 being pulled out from the spool 18 (see FIG. 2).

Incidentally, in the webbing take-up device 10, because the plate spring 128 is formed continuously from the spring cover 40 and the leading end portion 128B of the plate spring 128 is positioned in the vicinity of the axial position of the lock plate 46 (in the vicinity of the rotating shaft 41), the leading end portion 128B of the plate spring 128 always pressingly contacts the one axial-direction end portion of the lock plate 46 (the other side wall of the shaft receiving portion 116) regardless of whether or not the lock plate 46 has rotated (and regardless of the rotational amount of the lock plate 46 when the lock plate 46 has rotated, such as its position during rotation and its position after rotation). For this reason, the lock plate 46 is always urged toward the other axial-direction end (the one side) by the elastic force of the plate spring 128.

Thus, because the lock plate 46 is always held against the gear case 52 supporting the lock portion 48 of the lock plate 46, for example, the chattering of the lock plate 46 in its axial direction is effectively suppressed (absorbed).

Consequently, in the webbing take-up device 10, the chattering of the lock plate 46 in its axial direction can be effectively suppressed (absorbed) even if an urging member such as a spring washer is not disposed between the lock plate 46 and the spring cover 40 (see FIGS. 1 and 3).

Also, because it is not necessary to dispose an urging member such as a spring washer between the lock plate 46 and the spring cover 40, the number of parts in the device and the number of man-hours required for assembly can be reduced.

In the present embodiment, the leading end portion 128B of the plate spring 128 was configured to pressingly contact the shaft receiving portion 116 of the lock plate 46, but the present invention is not limited to this. It suffices as long as the portion further toward the leading end portion 128B side (i.e., the leading end side) than the base end portion 128A of the plate spring 128 pressingly contacts the shaft receiving portion 116 of the lock plate 46.

Also, in the present embodiment, the lock plate 46 was configured such that it was held against the gear case 52 serving as a plate due to the inertia of the plate spring 128, but the present invention is not limited to this. For example, in the case of a webbing take-up device 10 configured such that the cutout 13A of the one side wall 12A is not formed in the frame 12 and such that the lock portion 48 rotates between the one side wall 12A and the other side wall 12B, the lock plate 46 may be configured such that it is held against the one side wall 12A of the frame 12 due to the inertia of the plate spring 128.

Also, the webbing take-up device 10 of the present embodiment was configured such that the lock portion 48 of the lock plate 46 engaged (indirectly engaged) with the spool 18 via the lock gear 28 and the torsion shaft 24, but the present invention is not limited to this. The webbing take-up device 10 may also be configured such that the lock portion 48 directly engages with a spool that integrally includes a lock gear.

## Claims

1. A lock plate (46) chatter preventing structure which, under a predetermined condition, directly or indirectly engages with a take-up shaft that takes up a passenger-restraining webbing belt (20) to deter the rotation of the take-up shaft (18) in a webbing belt pullout direction, the lock plate (46) chatter preventing structure including:
a support member (40, 41) that rotatably supports the lock plate (46)
**characterised in that** the support member includes an urging portion (128) formed continuously from the support member (40, 41),
wherein the urging portion (128) includes a leading end (128B) that pressingly contacts one axial-direction end portion (116) of the lock plate (46) and urges the lock plate (46) toward the other axial-direction end.

2. The lock plate (46) chatter preventing structure of claim 1, wherein the leading end (128B) of the urging portion (128) is positioned in the vicinity of the axial position of the lock plate (46).

3. The lock plate (46) chatter preventing structure of claim 1, wherein the leading end (128B) of the urging portion (128) is configured to always pressingly contact the one axial-direction end portion (116) of the lock plate (46) regardless of the rotational amount of the lock plate (46).

4. The lock plate (46) chatter preventing structure of claim 1, wherein the urging portion (128) comprises a plate spring (128) formed continuously from the support member (40,41).

5. A webbing take-up device (10) comprising:
a take-up shaft (18) that takes up a webbing belt (20) for restraining a passenger;
lock means configured to include a lock plate (46) that includes one axial-direction end portion (116) rotatably supported by a support member (40, 41), the lock plate (46) rotating under a predetermined condition and directly or indirectly engaging with the take-up shaft (18) to deter the rotation of the take-up shaft (18) in a webbing belt pullout direction
**characterised in that** the support member includes
an urging portion (128) that is formed continuously from the support member (40, 41) and includes a leading end (128B) that pressingly contacts the one axial-direction end portion (116) of the lock plate (46) and urges the lock plate (46) toward the other axial-direction end.

6. The webbing take-up device of claim 5, wherein the leading end (128B) of the urging portion (128) is positioned in the vicinity of the axial position of the lock plate (46).

7. The webbing take-up device of claim 5, wherein the leading end (128B) of the urging portion (128) is configured to always pressingly contact the one axial-direction end portion (116) of the lock plate (46) regardless of the rotational amount of the lock plate (46).

8. The webbing take-up device of claim 5, wherein the urging portion (128) comprises a plate spring formed continuously from the support member (40, 41).

## Patentansprüche

1. Struktur zum Verhindern des Klapperns eines Schlossblechs (46) die, unter einer vorbestimmten Bedingung direkt oder indirekt mit einer Spule zusammenwirkt, die einen einen Passagier zurückhaltenden Gurt (20) aufnimmt, zum Abhalten der Drehung der Spule (18) in Gurtausziehrichtung, wobei die Struktur zum Verhindern des Klapperns des Schlossblechs (46) aufweist:
ein Stützelement (40, 41), das das Schlossblech (46) drehbar unterstützt,
**dadurch gekennzeichnet dass** das Stützelement aufweist:
einen drängenden Abschnitt (128), der fortlaufend aus dem Stützelement (40, 41) gebildet ist,
wobei der drängende Abschnitt (128) ein führendes Ende (128B) aufweist, das einen axial-ständigen Endabschnitt (116) des Schlossblechs (46) drückend kontaktiert und das Schlossblech (46) in Richtung des anderen in axialer Richtung gelegenen Endes drängt.

2. Struktur zum Verhindern des Klapperns des Schlossblechs (46) nach Anspruch 1, wobei das führende Ende (128)B) des drängenden Abschnitts (128) in der Umgebung der axialen Position des Schlossblechs (46) angeordnet ist.

3. Struktur zum Verhindern des Klapperns des Schlossblechs (46) nach Anspruch 1, wobei das führende Ende (128B) des drängenden Abschnitts (128) eingerichtet ist, um den einen in axialer Richtung gelegenen Endabschnitt (116) des Schlossblechs (46) ständig drückend zu kontaktieren, unabhängig vom Drehbetrag des Schlossblechs (46).

4. Struktur zum Verhindern des Klapperns des Schlossblech (46) nach Anspruch 1, wobei der drängende Abschnitt (128) eine Tellerfeder (128) aufweist, die fortlaufend aus dem Stützelement (40, 41) gebildet ist.

5. Gurtaufnahmevorrichtung (10) mit:
einer Spule (18), die einen Gurt (20) zum Zurückhalten eines Passagiers aufnimmt;
Verschlussmittel, die eingerichtet sind, ein Schlossblech (46) aufzuweisen, das einen axialständigen Endabschnitt (116) aufweist, der von einem Stützelement (40, 41) drehbar gestützt ist, wobei das Schlossblech (46) unter einer vorbestimmten Bedingung dreht und direkt oder indirekt mit der Spule (18) im Eingriff ist, um die Drehung der Spule (18) in Gurtauszugsrichtung zu verhindern,
**dadurch gekennzeichnet, dass** das Stützelement aufweist:
einen drängenden Abschnitt (128), der durchgehend aus dem Stützelement (40, 41) gebildet ist und ein führendes Ende (128B) aufweist, das den einen axialständigen Endabschnitt (116) des Schlossblechs (46) drängend kontaktiert und das Schlossblech (46) in Richtung des anderen in axialer Richtung gelegenen Endes drängt.

6. Gurtaufnahmevorrichtung nach Anspruch 5, wobei das führende Ende (128B) des drängenden Abschnitts (128) in der Umgebung der axialen Position des Schlossblechs (46) angeordnet ist.

7. Gurtaufnahmevorrichtung nach Anspruch 5, wobei das führende Ende (128B) des drängenden Abschnitts (128) eingerichtet ist, um den einen in axialer Richtung gelegenen Endabschnitt (116) des Schlossblechs (46) ständig drückend zu kontaktieren, unabhängig vom Drehbetrag des Schlossblechs (46).

8. Gurtaufnahmevorrichtung nach Anspruch 5, wobei der drängende Abschnitt (128) eine Tellerfeder aufweist, die durchgehend aus dem Stützelement (40, 41) gebildet ist.

## Revendications

1. Structure empêchant le cliquetis d'un élément de blocage (46) qui, dans une condition prédéterminée, s'engage directement ou indirectement avec un dispositif de rattrapage de jeu qui rattrape le jeu d'une sangle de ceinture de sécurité de passager (20) afin d'empêcher la rotation du dispositif de rattrapage de jeu (18) dans une direction de traction vers l'extérieur de la sangle de la ceinture, cette structure empêchant le cliquetis de l'élément de blocage (46) comprenant :
un élément de support (40, 41) qui supporte l'élément de blocage (46) de manière rotative, **caractérisé en ce que** cet élément de support comprend une partie à poussée (128) formée de façon continue depuis l'élément de support (40, 41),
cette partie à poussée (128) comprenant une extrémité avant (128B) qui touche avec pression une partie à une extrémité dans la direction axiale (116) de l'élément de blocage (46) et qui pousse l'élément de blocage (46) vers l'autre extrémité dans la direction axiale.

2. Structure empêchant le cliquetis d'un élément de blocage (46) selon la revendication 1, dans laquelle l'extrémité avant (128B) de la partie à poussée (128) est positionnée à proximité de la position axiale de l'élément de blocage (46).

3. Structure empêchant le cliquetis d'un élément de blocage (46) selon la revendication 1, dans laquelle l'extrémité avant (128B) de la partie à poussée (128) est configurée de façon à toujours toucher avec pression la partie à une extrémité dans la direction axiale (116) de l'élément de blocage (46), quelle que soit la quantité de rotation de l'élément de blocage (46).

4. Structure empêchant le cliquetis d'un élément de blocage (46) selon la revendication 1, dans laquelle la partie à poussée (128) comprend un ressort à lame (128) formé de manière continue depuis l'élément de support (40, 41).

5. Dispositif de rattrapage de jeu de sangle (10) comprenant :
un élément de rattrapage de jeu (18) qui rattrape le jeu d'une sangle (20) de ceinture pour retenir un passager ;
un moyen de blocage configuré de façon à comprendre un élément de blocage (46) qui comprend une partie à une extrémité dans la direction axiale (116) supportée de manière rotative par un élément de support (40, 41), cet élément de blocage (46) tournant dans une condition prédéterminée et s'engageant directement ou indirectement avec l'élément de rattrapage de jeu (18) pour empêcher la rotation de l'élément de rattrapage de jeu (18) dans une direction de traction vers l'extérieur de la sangle de la ceinture,
**caractérisé en ce que** l'élément de support comprend une partie à poussée (128) qui est formée de manière continue depuis l'élément de support (40, 41) et qui comprend une extrémité avant (128B) qui touche avec pression la partie à une extrémité dans la direction axiale (116) de l'élément de blocage (46) et qui pousse l'élément de blocage (46) vers l'autre extrémité dans la direction axiale.

6. Dispositif de rattrapage de jeu selon la revendication 5, dans lequel l'extrémité avant (128B) de la partie à poussée (128) est positionnée à proximité de la position axiale de l'élément de blocage (46).

7. Dispositif de rattrapage de jeu selon la revendication 5, dans lequel l'extrémité avant (128B) de la partie à poussée (128) est configurée de façon à toujours toucher avec pression la partie à une extrémité dans la direction axiale (116) de l'élément de blocage (46), quelle que soit la quantité de rotation de l'élément de blocage (46).

8. Dispositif de rattrapage de jeu selon la revendication 5, dans lequel la partie à poussée (128) comprend un ressort à lame formé de manière continue depuis l'élément de support (40, 41).
